(19) Europäisches Patentamt
European Patent Office
Office européen des brevets

(11) **EP 3 678 067 A1**

(12) **EUROPEAN PATENT APPLICATION**
published in accordance with Art. 153(4) EPC

(43) Date of publication:
**08.07.2020 Bulletin 2020/28**

(21) Application number: **19855724.1**

(22) Date of filing: **11.07.2019**

(51) Int Cl.:
***G06N 20/00*** (2019.01)   ***G06Q 10/10*** (2012.01)

(86) International application number:
**PCT/CN2019/095560**

(87) International publication number:
**WO 2020/042776 (05.03.2020 Gazette 2020/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.08.2018 CN 201810988166**

(71) Applicant: **Beijing Baidu Netcom
Science And Technology Co., Ltd.
Beijing 100085 (CN)**

(72) Inventors:
• **WU, Dongfeng
 Beijing 100085 (CN)**
• **SUN, Kai
 Beijing 100085 (CN)**

(74) Representative: **Wynne-Jones IP Limited
2nd Floor, 5210 Valiant Court
Gloucester Business Park
Gloucester
Gloucestershire GL3 4FE (GB)**

(54) **RECOMMENDING METHOD AND APPARATUS, STORAGE MEDIUM, AND TERMINAL DEVICE**

(57)    A recommendation method and device, as well as a storage medium and a terminal apparatus are provided according to the present application. The method includes: determining a weight and a variation of an influence factor for a candidate object; acquiring an expected value and an actual value of the influence factor; calculating an influence degree of the influence factor on the candidate object according to the expected value, the actual value, the variation and the weight of the influence factor; and calculating a recommendation degree of the candidate object according to the influence degree and the weight of the influence factor. An accuracy and an efficiency of the recommendation can be improved by using the present application.

determining a weight and a variation of an influence factor for a candidate object — S100

↓

acquiring an expected value and an actual value of the influence factor — S200

↓

calculating an influence degree of the influence factor on the candidate object according to the expected value, the actual value, the variation and the weight of the influence factor — S300

↓

calculating a recommendation degree of the candidate object according to the influence degree and the weight of the influence factor — S400

**FIG. 1**

**Description**

This application claims the priority of Chinese patent application No. 201810988166.7, filed with the Chinese Patent Office on August 28, 2018, entitled "Recommendation Method, Device, Storage Medium, and Terminal Apparatus", which is incorporated by reference herein in its entirety.

TECHNICAL FIELD

The present application relates to a field of computer technology, and in particular, to a recommendation method, and device, as well as a storage medium, and a terminal apparatus.

BACKGROUND

With the deep development of Artificial Intelligence (AI) technology, the AI technology is frequently applied to actual life scenarios. For example, AI technology is used to reserve a conference room for a user in a conference room reservation system. However, due to the large demand for conference rooms from enterprise users, there is likely be no conference room desired by the users or this conference room has likely be been reserved. At this time, providing a similar conference room can also meet user expectations to a certain extent.

At present, there are implementation solutions as follows to filter the conference rooms.

1. A candidate object is filtered out by logical judgment. For example, a conference room is filtered out from a conference room result according to user requirements. In a case that the user wishes to reserve a conference room at 3 pm available today, enters a filtering condition of "3 pm available today" into the system and finds no filtering result. Then, the user enters a filtering condition of "this afternoon" into the system again. At this time, the system performs a search and obtains conference rooms available on this afternoon, including the conference rooms available at 3:30, 4 and 4:30. This result will be recommended to the user for selection by the system.

2. The candidate object is selected by a neural network algorithm. For example, the desired conference room of the user and the conference room filtered out by the system are combined to be sample data, and a matching degree between the two is labeled. A neural network model is constructed by using the labeled sample data. When using this model to filter conference rooms, the matching degree between the filtered conference room and the desired conference room of the user may be automatically determined.

However, there are still defects as follows in the above solutions.

1. In the logical judgment of the solution 1, a condition is used for the logical judgment, which takes a large workload. In addition, the user may be required to make a further judgments based on the filtering result provided by the system, and user experience is poor.

2. A large amount of sample data needs to be collected and trained in the solution 2, so that a preliminary work cost is too high. In addition, a large uncertainty and poor adaptability exists in the neural network algorithm. Even after training with a large amount of sample data, the recommendation result acquired by using the model may not be accurate. Therefore, a recommendation accuracy is not high by using the neural network algorithm.

SUMMARY

A recommendation method, and device, as well as a storage medium and a terminal apparatus are provided according to embodiments of the present application, so as to at least solve the above technical problems in the existing technology

According to a first aspect, a recommendation method includes: determining a weight and a variation of an influence factor for a candidate object; acquiring an expected value and an actual value of the influence factor; calculating an influence degree of the influence factor on the candidate object according to the expected value, the actual value, the variation and the weight of the influence factor; and calculating a recommendation degree of the candidate object according to the influence degree and the weight of the influence factor.

In conjunction with the first aspect, in a first implementation of the first aspect, a type of the influence factor is a numerical type, and the variation includes an upper limit variation and a lower limit variation, and the calculating an influence degree of the influence factor on the candidate object according to the expected value, the actual value, the variation and the weight of the influence factor comprises: calculating a difference between the expected value and the lower limit variation of the influence factor to acquire a lower limit value of the influence factor; calculating a difference between the expected value and the upper limit variation of the influence factor, to acquire an upper limit value of the influence factor; determining that the actual value of the influence factor falls within a range between the lower limit value and the upper limit value; and calculating an influence degree of the influence factor on the candidate object according to the expected value, the actual value, the upper limit variation, the lower limit variation, and the weight of the influence factor.

In conjunction with the first implementation of the first aspect, in a second implementation of the first aspect, the calculating an influence degree of the influence factor on the candidate object according to the expected value, the actual value, the upper limit variation, the lower limit variation, and the weight of the influence factor comprises:

calculating the influence degree of the influence factor on the candidate object by using Equation 1 and Equation 2, if t > s, $sl = \frac{up-div}{up} * q$ (Equation 1), if t < s, $sl = \frac{down-div}{down} * q$ (Equation 2), where t is the actual value of the influence factor, s is the expected value of the influence factor, sl is the influence degree of the influence factor on the candidate object, and div is an absolute value of a difference between the actual value and the expected value of the influence factor; up is the upper limit variation of the influence factor; down is the lower limit variation of the influence factor, and q is the weight of the influence factor.

In conjunction with the first implementation of the first aspect, in a third implementation of the first aspect, the method further includes: determining that the actual value of the influence factor falls beyond the range between the lower limit value and the upper limit value, and determining that the influence degree of the influence factor on the candidate object is zero.

In conjunction with the first aspect, in a fourth implementation of the first aspect, the calculating a recommendation degree of the candidate object according to the influence degree and the weight of the influence factor comprises: calculating a ratio of a sum of the influence degrees of influence factors to a sum of the weights of the influence factors, to acquire the recommendation degree of the candidate object.

In conjunction with the first aspect, in a fifth implementation of the first aspect, a type of the influence factor is a non-numeric type, and the calculating an influence degree of the influence factor on the candidate object according to the expected value, the actual value, the variation and the weight of the influence factor comprises: determining the expected value and the actual value of the influence factor as an expected condition and an actual condition of the influence factor, respectively; and determining whether the expected condition and the actual condition of the influence factor are identical; determining that the influence degree of the influence factor on the candidate object is 100%, in the case that it is determined that the expected condition and the actual condition of the influence factor are identical; and determining that the influence degree of the influence factor on the candidate object is zero, in the case that it is determined that the expected condition of the influence factor is different from the actual condition.

In conjunction with the first aspect or any one of its implementation, in a sixth implementation of the first aspect, the method further includes: acquiring multiple candidate objects, ranking the multiple candidate objects according to the recommendation degrees of the multiple candidate objects, to acquire a ranking result; and sending the ranking result to the user terminal.

According to a second aspect, a recommendation device includes: a determining module configured to determine a weight and a variation of an influence factor for a candidate object; an acquiring module configured to acquire an expected value and an actual value of the influence factor; a first calculating module configured to calculate an influence degree of the influence factor on the candidate object according to the expected value, the actual value, the variation and the weight of the influence factor; and a second calculating module configured to calculate a recommendation degree of the candidate object according to the influence degree and the weight of the influence factor.

In conjunction with the second aspect, in a first implementation of the second aspect, a type of the influence factor is a numerical type, and the variation includes an upper limit variation and a lower limit variation, and the first calculating module includes: a lower limit calculating unit configured to calculate a difference between the expected value and the lower limit variation of the influence factor to acquire a lower limit value of the influence factor; an upper limit calculating unit configured to calculate a difference between the expected value and the upper limit variation of the influence factor, to acquire an upper limit value of the influence factor; a first determining unit configured to determine that an actual value of the influence factor falls within a range between the lower limit value and the upper limit value; and a first calculating unit configured to calculate an influence degree of the influence factor on the candidate object according to the expected value, the actual value, the upper limit variation, the lower limit variation, and the weight of the influence factor.

In conjunction with the first implementation of the second aspect, in a second implementation of the second aspect, the first calculating unit is further configured to: calculate the influence degree of the influence factor on the candidate object by using Equation 1 and Equation 2, if t > s, $sl = \frac{up-div}{up} * q$ (Equation 1), if t < s, $sl = \frac{down-div}{down} * q$ (Equation 2), where t is the actual value of the influence factor, s is the expected value of the influence factor, sl is the influence degree of the influence factor on the candidate object, and div is an absolute value of a difference between the actual value and the expected value of the influence factor; up is the upper limit variation of the influence factor; down is the lower limit variation of the influence factor, and q is the weight of the influence factor.

In conjunction with the first implementation of the second aspect, in a third implementation of the second aspect, the first calculating module further includes: a second calculating unit configured to determine that the actual value of the influence factor falls beyond the range between the lower limit value and the upper limit value, and determine that the influence degree of the influence factor on the candidate object is zero.

In conjunction with the second aspect, in a fourth implementation of the second aspect, the second calculating module is further configured to: calculate a ratio of a sum of the influence degrees of influence factors to a sum of the weights of the influence factors to acquire the recommendation degree of the candidate object.

In conjunction with the second aspect, in a fifth implementation of the second aspect, a type of the influence factor is a non-numeric type, and the first calculating module includes: an acquiring unit configured to determine the expected value and the actual value of the influence factor as an expected condition and an actual condition of the influence factor, respectively; and determine whether the expected condition and the actual condition of the influence factor are identical; a second determining unit configured to determine that the influence degree of the influence factor on the candidate object is 100%, in the case that it is determined that the expected condition and the actual condition of the influence factor are identical; and a third determining unit configured to determine that the influence degree of the influence factor on the candidate object is zero, in the case that it is determined that the expected condition of the influence factor is different from the actual condition.

In conjunction with the second aspect or any one of its implementation, in a sixth implementation of the second aspect, the device further includes: a ranking module configured to acquire multiple candidate objects, rank the multiple candidate objects according to the recommendation degree of the multiple candidate objects, to acquire a ranking result; and a sending module configured to send the ranking result to a user terminal.

The functions of the device may be implemented by hardware, or by hardware executing corresponding software. The hardware or software includes one or more modules corresponding to the above functions.

In a possible implementation, the recommendation device includes a processor and a storage device, the storage device is configured supporting the recommendation device to execute the above recommendation process, and the processor is configured to execute the program stored in the storage device. The recommendation device further includes a communication interface configured for communication between the recommendation device and another apparatus or communication network.

In a third aspect, a computer-readable storage medium is provided for storing computer software instructions used by the recommendation device, the computer software instructions include programs involved in execution of the above recommendation method.

One of the above technical solutions has the following advantages or beneficial effects.

According to the embodiment of the present application, the influence factor and the weight and the variation of the influence factor can be determined during a recommendation process of the candidate object, so that a dynamic configuration of the influence factor and a personalized recommendation of the candidate object can be realized with a strong universality. During the calculation of the recommendation degree of the candidate object, the candidate object is not selected by logical judgment with expected conditions, so that the workload is small and the efficiency is high.

The above summary is for the purpose of the specification only and is not intended to be limiting in any way. In addition to the illustrative aspects, embodiments, and features described above, further aspects, embodiments, and features of the present application will be readily understood by reference to the drawings and the following detailed description.

BRIEF DESCRIPTION OF THE DRAWINGS

In the drawings, unless otherwise specified, identical reference numerals will be used throughout the drawings to refer to identical or similar parts or elements. The drawings are not necessarily drawn to scale. It should be understood that these drawings depict only some embodiments disclosed in accordance with the present application and are not to be considered as limiting the scope of the present application.

FIG. 1 is a schematic flowchart of an embodiment of a recommendation method provided in the present application;
FIG. 2 is a schematic diagram of an embodiment of an influence factor provided in the present application;
FIG. 3 is a schematic flowchart of an embodiment of a calculation process of an influence degree of an influence factor on a candidate object provided in the present application;
FIG. 4 is a schematic flowchart of an embodiment of a similarity model provided in the present application;
FIG. 5 is a schematic diagram of an embodiment of a calculation parameter relation of an influence degree in the case of a numerical type influence factor provided in the present application;
FIG. 6 is a schematic flowchart of an embodiment of a calculation process of an influence degree in the case of a non-numeric type influence factor provided in the present application;

FIG. 7 is a schematic structural diagram of an embodiment of a recommendation device provided in the present application; and

FIG. 8 is a schematic structural diagram of an embodiment of a terminal apparatus provided in the present application.

DETAILED DESCRIPTION

In the following, only certain exemplary embodiments are briefly described. As those skilled in the art would realize, the described embodiments may be modified in various different ways, all without departing from the spirit or scope of the present application. Accordingly, the drawings and description are to be regarded as illustrative in nature and not restrictive.

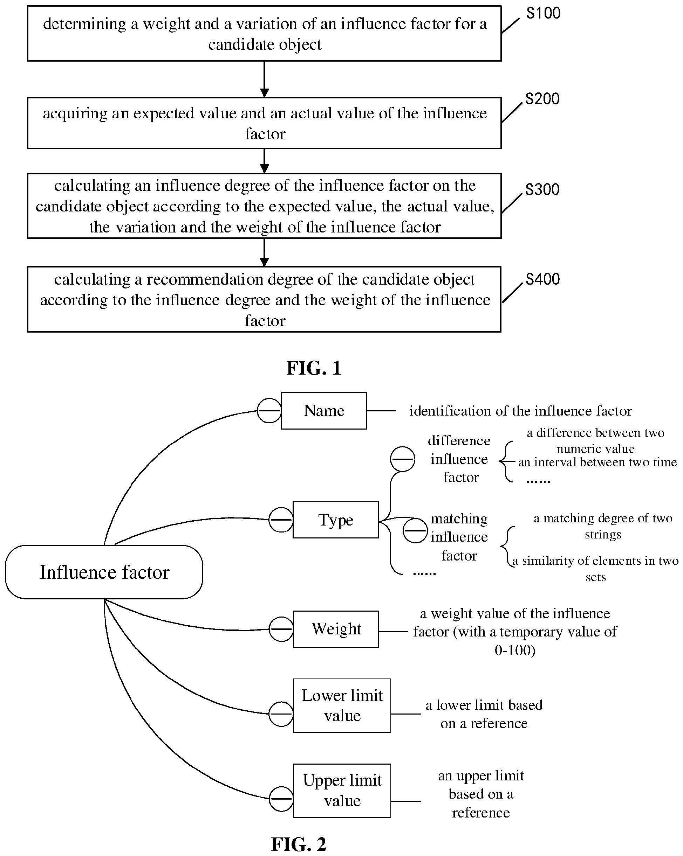

Referring to FIG. 1, a recommendation method is provided in an embodiment of the present application, which can be applied to a terminal apparatus. The terminal apparatus may include a computer, a microcomputer, a mobile phone, a tablet, and the like. A recommendation system may be operated in the terminal apparatus to implement the method in the embodiment. The method in the embodiment includes steps from S100 to S400, as follows.

S 100, determining a weight and a variation of an influence factor for a candidate object.

In the embodiment, the influence factor is a factor that determines a recommendation degree of the candidate object, and influences a similarity degree between the candidate object and user expectation. Taking conference room reservation as an example, the influence factor may include a starting time or a reserving time of the conference, a conference room capacity, the number of projectors (or whether there is a projector), and the like. If the starting time of the conference is important, it can be determined that the starting time of the conference has a weight of 60. If the desired starting time of conference of the user is allowed to change by 15 minutes, the variation of the influence factor includes an upper limit variation and a lower limit variation, both of which are 15 minutes.

In general, referring to FIG. 2, the influence factor can include:

(1) a name, which is an identification of the influence factor, for example, a time influence factor, a capacity influence factor;
(2) a type, which is a type of the influence factor, for example, a difference (numeric) influence factor (a type of an interval between two time, a difference between two lengths, etc.), a matching influence factor (a type of a matching degree of two strings, a similarity of elements in two sets, etc.);
(3) a weight, which indicates an influence degree of the influence factor on the recommendation degree of the candidate object. The greater the weight, the greater the influence degree of the influence factor on the recommendation degree of the candidate object;
(4) a lower limit variation, which is a minimum variation of the influence factor below a reference (a standard value or an expected value);
(5) an upper limit variation, which is a maximum variation of the influence factor above the reference.

As an example, in a scene of reserving a conference room, if a user wishes to reserve a 6-person conference room, the capacity influence factor may be determined as the influence factor for recommending a conference room in S100. If the upper limit variation and the lower limit variation are 2 and 1 respectively, a conference room capacity between 5 people (reference -lower limit variation) and 7 people (reference + upper limit variation) in a conference system can be determined as a candidate object for recommending the conference room.

S200, acquiring an expected value and an actual value of the influence factor.

In the embodiment, during the recommendation, the expected values of an identical influence factor for different candidate objects are generally identical. The user can input the expected value of the influence factor through a user terminal. However, the actual values of an identical influence factor for different candidates may be identical or different. For example, taking the influence factor of the starting time as an example, it is assumed that the user withes the starting time of the conference to be 10 am. In the recommendation system, the starting time (free time of the conference room) of the conference in a conference room A is 9 am; the starting time of the conference in a conference room B is 11 am; the starting time of the conference in a conference room C is 10:30 am. During the recommendation, for the influence factor of the starting time, the expected value is 10 am, the actual value of the conference room A is 9 am, the actual value of the conference room B is 11 am, and the actual value of the conference room C is 10:30 am.

S300, calculating an influence degree of the influence factor on the candidate object according to the expected value, the actual value, the variation and the weight of the influence factor. In the embodiment, a product of a similarity between the expected value and the actual value of the influence factor and the weight value may be used as the influence degree of the influence factor on the candidate object. For example, if the expected value of the starting time of the conference is 10 am, and the actual value of the starting time of the conference in the conference room A is 9 am, the similarity between the two values is acquired. If the weight is 10, the influence degree of the starting time of the conference on the conference room A is a product of 10 and a.

S400, calculating a recommendation degree of the candidate object according to the influence degree and the weight of the influence factor.

According to the embodiment of the present application, the influence factor as well as the weight and the variation of the influence factor can be adjusted during the execution of the recommendation method of the candidate object, so that a dynamic configuration of the influence factor can be realized and a personalized recommendation of the candidate object with a strong universality. During the recommendation of the candidate object, the candidate object is not selected by the logical judgment with expected conditions, so that the workload is small and the efficiency is high.

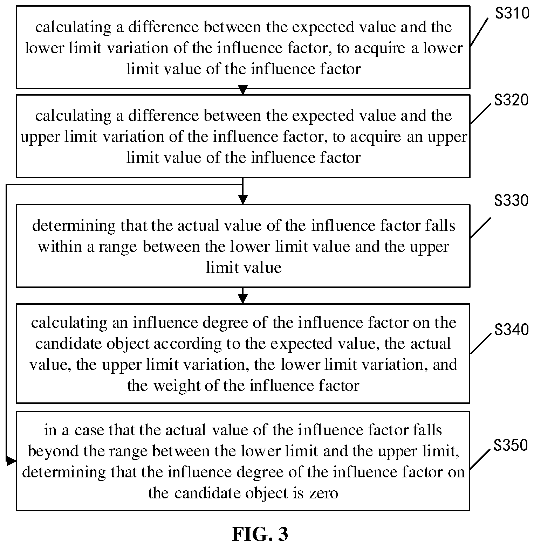

In a possible implementation, as shown in FIG. 3, if the influence factor is of a numerical type, a calculation process of the influence degree of the influence factor on the candidate object in S300 may include steps from S310 to S340 as follows.

S310, calculating a difference between the expected value and the lower limit variation of the influence factor, to acquire a lower limit value of the influence factor;

S320, calculating a difference between the expected value and the upper limit variation of the influence factor, to acquire an upper limit value of the influence factor;

S330, determining that the actual value of the influence factor falls within a range between the lower limit value and the upper limit value; and

S340, calculating an influence degree of the influence factor on the candidate object according to the expected value, the actual value, the upper limit variation, the lower limit variation, and the weight of the influence factor.

In a possible implementation, as shown in FIG. 3, S350 is further included. In a case that the actual value of the influence factor falls beyond the range between the lower limit and the upper limit, it is determined that the influence degree of the influence factor on the candidate object is zero.

As an example, taking the influence factor of the starting time of the conference as an example, if the desired starting time of the conference of the user is 15:00, the lower limit variation is 15 minutes and the upper limit variation is 30 minutes, then the lower limit value is 14:45, and the upper limit value is 15:30. If the actual value of the starting time of the conference in the conference room A is 15:15, the influence degree of the conference starting time on the conference room A is calculated in S340. If the actual value of the starting time of the conference in the conference room A is 16:00, which exceeds a range between the upper limit value and the lower limit value of the starting time, the influence degree of the starting time on conference room A is zero, significantly reduced, or negative and so on.

In the embodiment, if the influence factor is a numerical value, the similarity between the expected value and the actual value of the influence factor may be calculated firstly, and then multiplied by the weight to acquire the influence degree of the influence factor on the candidate object.

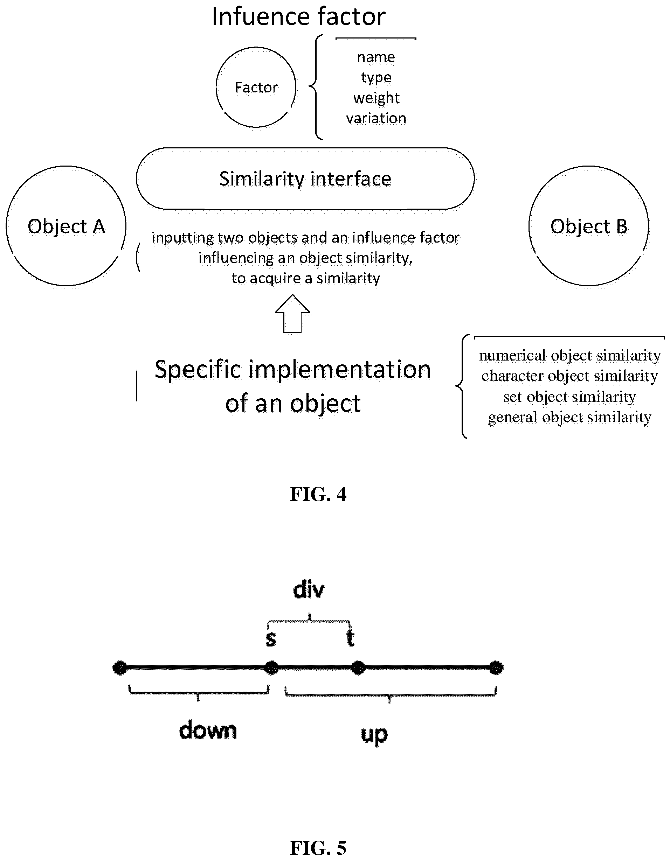

A similarity model is shown in FIG. 4. In a case of an expected object A (representing an expectation object for the influence factor) and a candidate object B (representing the actual value of the influence factor of the candidate object B), data of the both can be input into a similarity interface to calculate a similarity therebetween. Finally, the recommendation degree of the candidate object B can be calculated. The calculation of the similarity interface may include the calculation of a numerical object similarity, a character object similarity, a set object similarity, and a general object similarity, and so on.

In addition, the influence factors may include a numerical influence factor and a matching influence factor. The matching influence factor is also called a non-numeric influence factor. Therefore, an algorithm for calculating the influence degree of the influence factor on the candidate object may include a numerical similarity algorithm and a matching similarity algorithm. The numerical similarity algorithm is used to calculate the similarity between the expected value and the actual value of the numerical influence factor The matching similarity algorithm is used to calculate a consistency between the expected condition and the actual condition of the influence factor, for example, the aforementioned character object similarity, the set object similarity, and the general object similarity.

Referring to FIG. 5, t is the actual value of the influence factor, s is the expected value of the influence factor, div is an absolute value of a difference between the actual value and the expected value of the influence factor, up is the upper limit variation of the influence factor; down is the lower limit variation of the influence factor. If the actual value of the influence factor is within the range between the upper limit value and the lower limit value, Equation a and Equation b are used to calculate the similarity simila between the expected value and the actual value of the influence factor:

$$\text{if } t > s, \ simila = \frac{up - div}{up} \qquad \text{Equation a;}$$

$$\text{if } t < s, \ simila = \frac{down - div}{down} \qquad \text{Equation b.}$$

Further, if the actual value of the influence factor is not within the range between the upper limit value and the lower limit value, the similarity simila between the expected value and the actual value of the influence factor is zero.

As an example, taking the influence factor of the starting time of the conference as an example, the desired starting time of the conference of the user is 3 pm, the starting time (free time in the conference room) of the conference in the conference room A is obtained as 3:05 pm after searching, and the time can be regarded as a numerical value. According to Equation a, the similarity between 3 pm and 3:05 pm is: 1-5/15 = 66.67%. If a weight of the starting time of the conference is 60, the influence degree of the starting time of the conference on the candidate object (the conference room A) is: 60 * 66.67% = 40.

In the embodiment, by multiplying the above-mentioned Equations a and b with the weight, respectively, the following Equations 1 and 2 can be acquired, that is, the influence degree of the influence factor on the candidate object. Then, the above S340 may include:

calculating the influence degree of the influence factor on the candidate object by using Equation 1 and Equation 2,

$$\text{if } t > s, \; sl = \frac{up-div}{up} * q \qquad \text{Equation 1;}$$

$$\text{if } t < s, \; sl = \frac{down-div}{down} * q \qquad \text{Equation 2;}$$

where sl is the influence degree of the influence factor on the candidate object, and q is the weight of the influence factor.

In a possible implementation, if there is more than one influence factor, the above S400 may include: calculating a ratio of a sum of influence degrees of influence factors to a sum of weights of the influence factors, to acquire the recommendation degree of the candidate object.

As an example, if the influence factor of conference room A includes the starting time of the conference, the conference room capacity, and whether there is a projector, and the influence degrees of each influence factor on conference room A are 40, 15, and 20, respectively, and the weight of each influence factor is 60, 20, and 20, respectively, the recommendation degree of the conference room A is (40 + 15 + 20) / (60 + 20 + 20) = 75%.

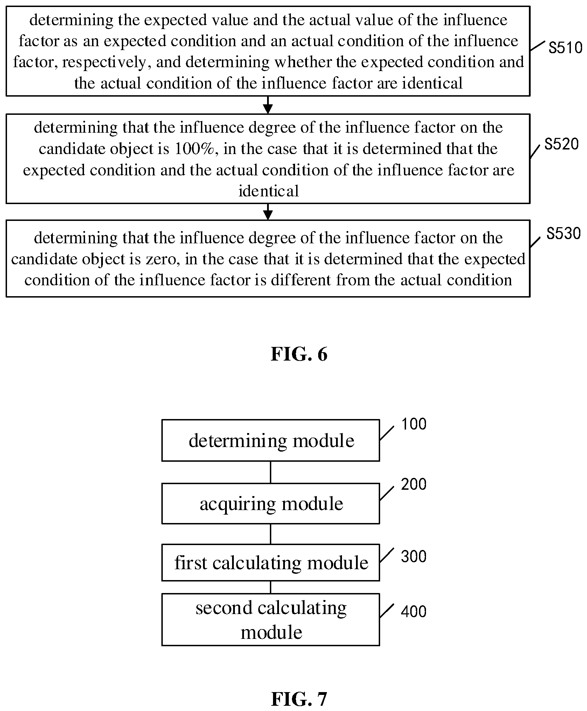

In a possible implementation, if the type of the influence factor is a non-numeric type, a process of calculating the influence degree of the influence factor on the candidate object may include the following steps from S510 to S530, as shown in FIG. 6.

S510, determining the expected value and the actual value of the influence factor as an expected condition and an actual condition of the influence factor, respectively, and determining whether the expected condition and the actual condition of the influence factor are identical;

S520, determining that the influence degree of the influence factor on the candidate object is 100%, in the case that it is determined that the expected condition and the actual condition of the influence factor are identical; and

S530, determining that the influence degree of the influence factor on the candidate object is zero, in the case that it is determined that the expected condition of the influence factor is different from the actual condition.

As an example, the influence factor is whether there is a projector in the conference room. The user wishes that there is a projector in the conference room. However, a projector is not included in the conference room A. At this time, the expected condition of the influence factor is not identical with the actual condition in the conference room A, then the influence degree of the influence factor (whether there is a projector in the conference room) on the conference room A is zero. If there is a projector in the conference room A, at this time, the expected condition of the influence factor is identical with the actual condition, the influence degree of the influence factor on the candidate object is 100%.

In a possible implementation, if there are multiple candidate objects, after respective recommendation degrees of the multiple candidate objects are calculated through the foregoing embodiment, an acquired recommendation result may be provided to the user terminal. For example, the multiple candidate objects are ranked according to the respective recommendation degrees of the multiple candidate objects; then, a ranking result is sent to the user terminal. For another example, a candidate object of which the recommendation degree reaches a recommendation threshold is determined as the recommendation result.

The advantages of this embodiment include as follows.

1. A Strong universality. After the influence factor being determined, a personalized recommendation model can be defined.

2. A good extensibility. In the process of determining the influence factor, an influence factor can be added or deleted, and the value of the influence factor can be dynamically adjusted.

3. A multi-level recommendation. The recommendation model can be accumulated to acquire a similarity between a complex candidate object and an expected object.

The method of this embodiment can be applied to practical scenarios such as reserving a conference room, a hotel room, or an airplane flight and the like. For example, a user inputs an expected conference room into a user terminal by voice or text entering, and the conference room recommendation system (software) in the user terminal may be used to recommend a conference room recommendation result that meets the expectations according to the method of this embodiment. An accuracy and an efficiency of the conference room recommendation can be effectively improved. Taking a practical scenario, such as reserving a conference room, as an example, a recommendation process of a conference room is described in detail as follows, combined with Table 1 to Table 5:

1. The influence factor and related attributes of the conference room for recommending by the conference room recommendation system are determined.

The defined influence factors are shown in Table 1:

Table 1:

| Name | Type | Weight | Lower limit variation | Upper limit variation |
|---|---|---|---|---|
| Starting time of the conference | Numerical influence factor | 60 | 15 | 15 |
| Conference room capacity | Numerical influence factor | 20 | 2 | 4 |
| Whether there is a projector | Matching influence factor | 20 | N/A | N/A |

Here, a projector influence factor is a matching influence factor. If there is a projector in the conference room, the similarity is 100%. If there is no projector in the conference room, the similarity is zero. Therefore, there is no lower limit variation and upper limit variation for the influence factor of the projector.

2. An expected condition of the user is acquired and is converted into a standard value (the expected value).

If the user expects a conference room that is free at 3 pm, in which 6 persons can be accommodated and there is a projector, the expected values of respective influence factors can be converted as follows.

The expected value of the starting time of the conference is 15:00.

The expected value of the conference room capacity is 6.

The expected value of whether there is an expectation for the projector is Yes.

3. The actual value of each influence factor in the conference room to be recommended is acquired, the similarity of each influence factor is calculated, respectively, and finally a similarity of the conference room to be recommended and the expected conference room of the user is calculated.

Assuming that there are three conference rooms to be recommended, the conditions thereof are shown in Table 2:

Table 2:

| Name of a conference room | Starting time of the conference | Conference room capacity | Whether there is a projector |
|---|---|---|---|
| A | 15:00 | 5 | NO |
| B | 14:55 | 7 | YES |
| C | 15:10 | 6 | NO |

According to the above-mentioned recommendation method, the influence degrees of the three influence factors of the conference rooms to be recommended are calculated respectively, and then a similarity percentage (recommendation degree) of the three conference rooms and the expected conference room of the user is calculated.

Here, the conditions of conference room A are shown in Table 3.

Table 3:

| Attribute | Expected value | Actual value | Lower limit value | Upper limit value | Weight | Influence degree |
|---|---|---|---|---|---|---|
| Starting time of the conference | 15:00 | 15:00 | 14:45 | 15:15 | 60 | 60 |

(continued)

| Attribute | Expected value | Actual value | Lower limit value | Upper limit value | Weight | Influence degree |
|---|---|---|---|---|---|---|
| Conference room capacity | 6 | 5 | 4 | 10 | 20 | 10 |
| Whether there is a projector | YES | NO | - | - | 20 | 0 |

Here, the lower limit value in Table 3 is a difference between the expected value and the lower limit variation, and the upper limit value is a difference between the expected value and the upper limit variation.

According to data in Table 3, the similarity percentage between the conference room A and the expected conference room is: (60 + 10 + 0) / (60 + 20 + 20) = 70%.

The conditions of the conference room B and C are shown in Table 4 and Table 5, respectively.

Table 4:

| Attribute | Expected value | Actual value | Minimum value | Maximal value | Weight | Influence degree |
|---|---|---|---|---|---|---|
| Starting time of the conference | 15:00 | 14:55 | 14:45 | 15:15 | 60 | 40 |
| Conference room capacity | 6 | 7 | 4 | 10 | 20 | 15 |
| Whether there is a projector | YES | YES | - | - | 20 | 20 |

Table 5:

| Attribute | Expected value | Actual value | Minimum value | Maximal value | Weight | Influence degree |
|---|---|---|---|---|---|---|
| Starting time of the conference | 15:00 | 15:10 | 14:45 | 15:15 | 60 | 20 |
| Conference room capacity | 6 | 6 | 4 | 10 | 20 | 20 |
| Whether there is a projector | YES | NO | - | - | 20 | 0 |

According to an above calculation principle of calculating the similarity percentage for the conference room A, the similarity percentages between the conference room B, the conference room C and the expected conference room are calculated, respectively to obtain 75% and 40%, according to data in Table 4 and Table 5.

Therefore, according to the similarity percentages, the conference rooms to be recommended is ranked to obtain a ranking result of B> A> C. This ranking result can be fed back to the user terminal, and the user can select a conference room from it.

According to this embodiment, user requirements can be better satisfied, and a size of the influence factors and their influence values can be adjusted, so as to provide comprehensive recommendations.

Referring to FIG. 7, a recommendation device is provided in an embodiment of the present application, including: a determining module 100 configured to determine a weight and a variation of an influence factor for a candidate object; an acquiring module 200 configured to acquire an expected value and an actual value of the influence factor; a first calculating module 300 configured to calculate an influence degree of the influence factor on the candidate object according to the expected value, the actual value, the variation and the weight of the influence factor; and a second calculating module 400 configured to calculate a recommendation degree of the candidate object according to the influence degree and the weight of the influence factor.

In a possible implementation, a type of the influence factor is a numerical type, and the variation includes an upper limit variation and a lower limit variation, and the first calculating module 300 includes: a lower limit calculating unit configured to calculate a difference between the expected value and the lower limit variation of the influence factor, to acquire a lower limit value of the influence factor; an upper limit calculating unit configured to calculate a difference between the expected value and the upper limit variation of the influence factor, to acquire an upper limit value of the influence factor; a first determining unit configured to determine that an actual value of the influence factor falls within a range between the lower limit value and the upper limit value; and a first calculating unit configured to calculate an influence degree of the influence factor on the candidate object according to the expected value, the actual value, the upper limit variation, the lower limit variation, and the weight of the influence factor.

In a possible implementation, the first calculating unit is further configured to: calculate the influence degree of the influence factor on the candidate object by using Equation 1 and Equation 2, if t > s, $sl = \frac{up-div}{up} * q$ (Equation 1), if t < s, $sl = \frac{down-div}{down} * q$ (Equation 2), where t is the actual value of the influence factor, s is the expected value of the influence factor, sl is the influence degree of the influence factor on the candidate object, and div is an absolute value of a difference between the actual value and the expected value of the influence factor; up is the upper limit variation of the influence factor; down is the lower limit variation of the influence factor, and q is the weight of the influence factor.

In a possible implementation, the first calculating module 300 further includes: a second calculating unit configured to determine that the actual value of the influence factor falls beyond the range between the lower limit value and the upper limit value, and determine that the influence degree of the influence factor on the candidate object is zero.

In a possible implementation, the second calculating module is further configured to: calculate a ratio of a sum of the influence degrees of influence factors to a sum of the weights of the influence factors, to acquire the recommendation degree of the candidate object.

In a possible implementation, a type of the influence factor is a non-numeric type, and the first calculating module includes: an acquiring unit configured to determine the expected value and the actual value of the influence factor as an expected condition and an actual condition of the influence factor, respectively; and determine whether the expected condition and the actual condition of the influence factor are identical; a second determining unit configured to determine that the influence degree of the influence factor on the candidate object is 100%, in the case that it is determined that the expected condition and the actual condition of the influence factor are identical; and a third determining unit configured to determine that the influence degree of the influence factor on the candidate object is zero, in the case that it is determined that the expected condition of the influence factor is different from the actual condition.

In a possible implementation, the device further includes: a ranking module configured to acquire multiple candidate objects, rank the multiple candidate objects according to the recommendation degrees of the multiple candidate objects, to acquire a ranking result; and a sending module configured to send the ranking result to a user terminal.

The functions of the device may be implemented by hardware, or by hardware executing corresponding software. The hardware or software includes one or more modules corresponding to the above functions.

In a possible implementation, a recommendation structure includes a processor and a storage device, the storage is configured supporting the recommendation device to execute the above recommendation process, and the processor is configured to execute the program stored in the storage device. The recommendation device further includes a communication interface configured for communication between the recommendation device and another apparatus or communication network.

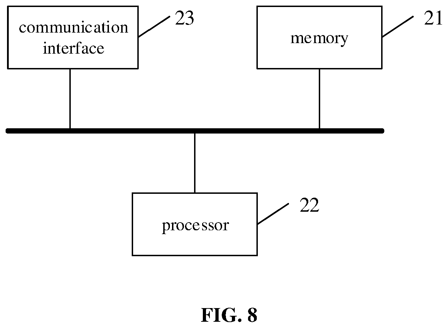

A terminal apparatus for recommendation is provided in the embodiment of the present application, as shown in FIG. 8, the apparatus includes: a memory 21 and a processor 22. The memory 21 stores a computer program executable on the processor 22. When the processor 22 executes the computer program, the service data promotion method in the foregoing embodiment is implemented. The number of the memory 21 and the processor 22 may be one or more.

The apparatus further includes:

a communication interface 23 configured to communicate with an external device and exchange data.

The memory 21 may include a high-speed RAM memory and may also include a nonvolatile memory, such as at least one magnetic disk memory.

If the memory 21, the processor 22, and the communication interface 23 are implemented independently, the memory 21, the processor 22, and the communication interface 23 may be connected to each other through a bus and communicate with one another. The bus may be an Industry Standard Architecture (ISA) bus, a Peripheral Component (PCI) bus, an Extended Industry Standard Component (EISA) bus, or the like. The bus may be divided into an address bus, a data bus, a control bus, and the like. For ease of illustration, only one bold line is shown in FIG. 8, but it does not mean that there is only one bus or one type of bus.

Optionally, in a specific implementation, if the memory 21, the processor 22, and the communication interface 23 are integrated on one chip, the memory 21, the processor 22, and the communication interface 23 may implement mutual communication through an internal interface.

According to an embodiment of the present application, a computer-readable storage medium is provided for storing computer software instructions, which include programs involved in execution of the above recommendation method.

In the description of the specification, the description of the terms "one embodiment," "some embodiments," "an example," "a specific example," or "some examples" and the like means the specific features, structures, materials, or characteristics described in connection with the embodiment or example are included in at least one embodiment or example of the present application. Furthermore, the specific features, structures, materials, or characteristics described may be combined in any suitable manner in any one or more of the embodiments or examples. In addition, different embodiments or examples described in this specification and features of different embodiments or examples may be incorporated and combined by those skilled in the art without mutual contradiction.

In addition, the terms "first" and "second" are used for descriptive purposes only and are not to be construed as indicating or implying relative importance or implicitly indicating the number of indicated technical features. Thus, features defining "first" and "second" may explicitly or implicitly include at least one of the features. In the description of the present application, "multiple" means two or more, unless expressly limited otherwise.

Any process or method descriptions described in flowcharts or otherwise herein may be understood as representing modules, segments or portions of code that include one or more executable instructions for implementing the steps of a particular logic function or process. The scope of the preferred embodiments of the present application includes additional implementations where the functions may not be performed in the order shown or discussed, including according to the functions involved, in substantially simultaneous or in reverse order, which should be understood by those skilled in the art to which the embodiment of the present application belongs.

Logic and/or steps, which are represented in the flowcharts or otherwise described herein, for example, may be thought of as a sequencing listing of executable instructions for implementing logic functions, which may be embodied in any computer-readable medium, for use by or in connection with an instruction execution system, device, or apparatus (such as a computer-based system, a processor-included system, or other system that fetch instructions from an instruction execution system, device, or apparatus and execute the instructions). For the purposes of this specification, a "computer-readable medium" may be any device that may contain, store, communicate, propagate, or transport the program for use by or in connection with the instruction execution system, device, or apparatus. More specific examples (not a non-exhaustive list) of the computer-readable media include the following: electrical connections (electronic devices) having one or more wires, a portable computer disk cartridge (magnetic device), random access memory (RAM), read only memory (ROM), erasable programmable read only memory (EPROM or flash memory), optical fiber devices, and portable read only memory (CDROM). In addition, the computer-readable medium may even be paper or other suitable medium upon which the program may be printed, as it may be read, for example, by optical scanning of the paper or other medium, followed by editing, interpretation or, where appropriate, process otherwise to electronically acquire the program, which is then stored in a computer memory.

It should be understood that various portions of the present application may be implemented by hardware, software, firmware, or a combination thereof. In the above embodiments, multiple steps or methods may be implemented in software or firmware stored in memory and executed by a suitable instruction execution system. For example, if implemented in hardware, as in another embodiment, they may be implemented using any one or a combination of the following techniques well known in the art: discrete logic circuits having a logic gate circuit for implementing logic functions on data signals, application specific integrated circuits with suitable combinational logic gate circuits, programmable gate arrays (PGA), field programmable gate arrays (FPGAs), and the like.

Those skilled in the art may understand that all or some of the steps carried in the methods in the foregoing embodiments may be implemented by a program instructing relevant hardware. The program may be stored in a computer-readable storage medium, and when executed, one of the steps of the method embodiment or a combination thereof is included.

In addition, each of the functional units in the embodiments of the present application may be integrated in one processing module, or each of the units may exist alone physically, or two or more units may be integrated in one module. The above-mentioned integrated module may be implemented in the form of hardware or in the form of software functional module. When the integrated module is implemented in the form of a software functional module and is sold or used as an independent product, the integrated module may also be stored in a computer-readable storage medium. The storage medium may be a read only memory, a magnetic disk, an optical disk, or the like.

The foregoing descriptions are merely specific embodiments of the present application, but not intended to limit the protection scope of the present application. Those skilled in the art may easily conceive of various changes or modifications within the technical scope disclosed herein, all these should be covered within the protection scope of the present application. Therefore, the protection scope of the present application should be subject to the protection scope of the claims.

While the embodiments of the present disclosure contains many specifics, these should not be construed as limitations on the scope of any invention or of what may be claimed, but rather as descriptions of features that may be specific to particular embodiments of particular inventions. Various modifications and adaptations may be made by those skilled in the art without departing from the scope of the invention as defined in the appended claims. The scope of the invention, therefore, shall be defined solely by the following claims.

**Claims**

1. A recommendation method, comprising:

   determining a weight and a variation of an influence factor for a candidate object;
   acquiring an expected value and an actual value of the influence factor;
   calculating an influence degree of the influence factor on the candidate object according to the expected value, the actual value, the variation and the weight of the influence factor; and
   calculating a recommendation degree of the candidate object according to the influence degree and the weight of the influence factor.

2. The recommendation method according to claim 1, wherein a type of the influence factor is a numerical type, and the variation comprises an upper limit variation and a lower limit variation, and
   the calculating an influence degree of the influence factor on the candidate object according to the expected value, the actual value, the variation and the weight of the influence factor comprises:

   calculating a difference between the expected value and the lower limit variation of the influence factor, to acquire a lower limit value of the influence factor;
   calculating a difference between the expected value and the upper limit variation of the influence factor, to acquire an upper limit value of the influence factor;
   determining that the actual value of the influence factor falls within a range between the lower limit value and the upper limit value; and
   calculating an influence degree of the influence factor on the candidate object according to the expected value, the actual value, the upper limit variation, the lower limit variation, and the weight of the influence factor.

3. The recommendation method according to claim 2, wherein the calculating an influence degree of the influence factor on the candidate object according to the expected value, the actual value, the upper limit variation, the lower limit variation, and the weight of the influence factor comprises:
   calculating the influence degree of the influence factor on the candidate object by using Equation 1 and Equation 2,

$$\text{if } t > s,\ sl = \frac{up - div}{up} * q \qquad \text{Equation 1,}$$

$$\text{if } t < s,\ sl = \frac{down - div}{down} * q \qquad \text{Equation 2,}$$

   wherein t is the actual value of the influence factor, s is the expected value of the influence factor, sl is the influence degree of the influence factor on the candidate object, and div is an absolute value of a difference between the actual value and the expected value of the influence factor; up is the upper limit variation of the influence factor; down is the lower limit variation of the influence factor, and q is the weight of the influence factor.

4. The recommendation method of claim 2, further comprising:
   determining that the actual value of the influence factor falls beyond the range between the lower limit value and the upper limit value, and determining that the influence degree of the influence factor on the candidate object is zero.

5. The recommendation method according to claim 1, wherein the calculating a recommendation degree of the candidate object according to the influence degree and the weight of the influence factor comprises:
   calculating a ratio of a sum of influence degrees of influence factors to a sum of weights of the influence factors, to acquire the recommendation degree of the candidate object.

6. The recommendation method of claim 1, wherein a type of the influence factor is a non-numeric type, and the calculating an influence degree of the influence factor on the candidate object according to the expected value, the actual value, the variation and the weight of the influence factor comprises:

   determining the expected value and the actual value of the influence factor as an expected condition and an actual condition of the influence factor, respectively; and determining whether the expected condition and the actual condition of the influence factor are identical;
   determining that the influence degree of the influence factor on the candidate object is 100%, in the case that it is determined that the expected condition and the actual condition of the influence factor are identical; and determining that the influence degree of the influence factor on the candidate object is zero, in the case that it is determined that the expected condition of the influence factor is different from the actual condition.

7. The recommendation method according to any one of claims 1 to 6, further comprising:

   acquiring a plurality of candidate objects; ranking the plurality of candidate objects according to the recommendation degrees of the plurality of candidate objects, to acquire a ranking result; and
   sending the ranking result to a user terminal.

8. A recommendation device, comprising:

   a determining module configured to determine a weight and a variation of an influence factor for a candidate object;
   an acquiring module configured to acquire an expected value and an actual value of the influence factor;
   a first calculating module configured to calculate an influence degree of the influence factor on the candidate object according to the expected value, the actual value, the variation and the weight of the influence factor; and
   a second calculating module configured to calculate a recommendation degree of the candidate object according to the influence degree and the weight of the influence factor.

9. The recommendation device according to claim 8, wherein a type of the influence factor is a numerical type, and the variation comprises an upper limit variation and a lower limit variation, and the first calculating module comprises:

   a lower limit calculating unit configured to calculate a difference between the expected value and the lower limit variation of the influence factor, to acquire a lower limit value of the influence factor;
   an upper limit calculating unit configured to calculate a difference between the expected value and the upper limit variation of the influence factor, to acquire an upper limit value of the influence factor;
   a first determining unit configured to determine that the actual value of the influence factor falls within a range between the lower limit value and the upper limit value; and
   a first calculating unit configured to calculate an influence degree of the influence factor on the candidate object according to the expected value, the actual value, the upper limit variation, the lower limit variation, and the weight of the influence factor.

10. The recommendation device according to claim 9, wherein the first calculating unit is further configured to:
    calculate the influence degree of the influence factor on the candidate object by using Equation 1 and Equation 2,

$$\text{if } t > s, \ sl = \frac{up - div}{up} * q \qquad \text{Equation 1,}$$

$$\text{if } t < s, \ sl = \frac{down - div}{down} * q \qquad \text{Equation 2,}$$

wherein t is the actual value of the influence factor, s is the expected value of the influence factor, sl is the influence degree of the influence factor on the candidate object, and div is an absolute value of a difference between the actual value and the expected value of the influence factor; up is the upper limit variation of the influence factor; down is the lower limit variation of the influence factor, and q is the weight of the influence factor.

**11.** The recommendation device of claim 9, wherein the first calculating module further comprises:
a second calculating unit configured to determine that the actual value of the influence factor falls beyond the range between the lower limit value and the upper limit value, and determine that the influence degree of the influence factor on the candidate object is zero.

**12.** The recommendation device according to claim 8, wherein the second calculating module is further configured to:
calculate a ratio of a sum of the influence degrees of influence factors to a sum of the weights of the influence factors, to acquire the recommendation degree of the candidate object.

**13.** The recommendation device of claim 8, wherein a type of the influence factor is a non-numeric type, and the first calculating module comprises:

an acquiring unit configured to determine the expected value and the actual value of the influence factor as an expected condition and an actual condition of the influence factor, respectively; and determine whether the expected condition and the actual condition of the influence factor are identical;
a second determining unit, configured to determine that the influence degree of the influence factor on the candidate object is 100%, in the case that it is determined that the expected condition and the actual condition of the influence factor are identical; and
a third determining unit, configured to determine that the influence degree of the influence factor on the candidate object is zero, in the case that it is determined that the expected condition of the influence factor is different from the actual condition.

**14.** The recommendation device according to any one of claims 8 to 13, further comprising:

a ranking module configured to acquire a plurality of candidate objects; rank the plurality of candidate objects according to the recommendation degrees of the plurality of candidate objects, to acquire a ranking result; and
a sending module configured to send the ranking result to a user terminal.

**15.** A terminal apparatus for implementing a recommendation, comprising:

one or more processors; and
a storage device configured for storing one or more programs, wherein
the one or more programs are executed by the one or more processors to enable the one or more processors to implement the recommendation method of any one of claims 1 to 7.

**16.** A computer-readable storage medium, in which a computer program is stored, wherein the computer program, when executed by a processor, implements the recommendation method of any one of claims 1 to 7.

| | |
|---|---|
| determining a weight and a variation of an influence factor for a candidate object | S100 |
| ↓ | |
| acquiring an expected value and an actual value of the influence factor | S200 |
| ↓ | |
| calculating an influence degree of the influence factor on the candidate object according to the expected value, the actual value, the variation and the weight of the influence factor | S300 |
| ↓ | |
| calculating a recommendation degree of the candidate object according to the influence degree and the weight of the influence factor | S400 |

**FIG. 1**

Influence factor

— Name — identification of the influence factor

— Type
  - difference influence factor — { a difference between two numeric value ← an interval between two time ......
  - matching influence factor — { a matching degree of two strings ← a similarity of elements in two sets
  - ......

— Weight — a weight value of the influence factor (with a temporary value of 0-100)

— Lower limit value — a lower limit based on a reference

— Upper limit value — an upper limit based on a reference

**FIG. 2**

calculating a difference between the expected value and the lower limit variation of the influence factor, to acquire a lower limit value of the influence factor

S310

calculating a difference between the expected value and the upper limit variation of the influence factor, to acquire an upper limit value of the influence factor

S320

determining that the actual value of the influence factor falls within a range between the lower limit value and the upper limit value

S330

calculating an influence degree of the influence factor on the candidate object according to the expected value, the actual value, the upper limit variation, the lower limit variation, and the weight of the influence factor

S340

in a case that the actual value of the influence factor falls beyond the range between the lower limit and the upper limit, determining that the influence degree of the influence factor on the candidate object is zero

S350

**FIG. 3**

# Infuence factor

Factor { 
name
type
weight
variation

Similarity interface

Object A

inputting two objects and an influence factor
influencing an object similarity,
to acquire a similarity

Object B

Specific implementation
of an object {
numerical object similarity
character object similarity
set object similarity
general object similarity

**FIG. 4**

**div**

s ⎤ t

down

up

**FIG. 5**

**EP 3 678 067 A1**

| determining the expected value and the actual value of the influence factor as an expected condition and an actual condition of the influence factor, respectively, and determining whether the expected condition and the actual condition of the influence factor are identical | S510 |
| determining that the influence degree of the influence factor on the candidate object is 100%, in the case that it is determined that the expected condition and the actual condition of the influence factor are identical | S520 |
| determining that the influence degree of the influence factor on the candidate object is zero, in the case that it is determined that the expected condition of the influence factor is different from the actual condition | S530 |

**FIG. 6**

| determining module | 100 |
| acquiring module | 200 |
| first calculating module | 300 |
| second calculating module | 400 |

**FIG. 7**

18

communication
interface ⟋ 23

memory ⟋ 21

processor ⟋ 22

**FIG. 8**

## INTERNATIONAL SEARCH REPORT

International application No.

**PCT/CN2019/095560**

**A. CLASSIFICATION OF SUBJECT MATTER**

G06N 20/00(2019.01)i; G06Q 10/10(2012.01)i

According to International Patent Classification (IPC) or to both national classification and IPC

**B. FIELDS SEARCHED**

Minimum documentation searched (classification system followed by classification symbols)

G06N; G06Q

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 推荐, 权重, 变化, 影响, 因子, 因素, 对象, 期望, 希望, 实际, 值, 计算, recommend+, weight, variation, influence, factor, object, expect, actual, value, calculat+

**C. DOCUMENTS CONSIDERED TO BE RELEVANT**

| Category* | Citation of document, with indication, where appropriate, of the relevant passages | Relevant to claim No. |
|---|---|---|
| PX | CN 109165742 A (BEIJING BAIDU NETCOM SCIENCE AND TECHNOLOGY CO., LTD.) 08 January 2019 (2019-01-08) claims 1-16 | 1-16 |
| X | CN 105761106 A (XU, XUANXUAN) 13 July 2016 (2016-07-13) description, paragraphs [0097]-[0162] and [0230] | 1-16 |
| A | CN 107368907 A (CTRIP COMPUTER TECHNOLOGY (SHANGHAI) CO., LTD.) 21 November 2017 (2017-11-21) entire document | 1-16 |
| A | CN 108268559 A (ALIBABA GROUP HOLDING LIMITED) 10 July 2018 (2018-07-10) entire document | 1-16 |
| A | US 2016239765 A1 (AMADEUS S.A.S.) 18 August 2016 (2016-08-18) entire document | 1-16 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 September 2019** | **09 October 2019** |

| Name and mailing address of the ISA/CN | Authorized officer |
|---|---|
| **China National Intellectual Property Administration No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/095560**

| Patent document cited in search report | | | Publication date (day/month/year) | Patent family member(s) | | | Publication date (day/month/year) |
|---|---|---|---|---|---|---|---|
| CN | 109165742 | A | 08 January 2019 | None | | | |
| CN | 105761106 | A | 13 July 2016 | WO | 2017133704 | A1 | 10 August 2017 |
| CN | 107368907 | A | 21 November 2017 | None | | | |
| CN | 108268559 | A | 10 July 2018 | WO | 2018126933 | A1 | 12 July 2018 |
| | | | | TW | 201826151 | A | 16 July 2018 |
| US | 2016239765 | A1 | 18 August 2016 | CN | 107251022 | A | 13 October 2017 |
| | | | | AU | 2016222066 | A1 | 24 August 2017 |
| | | | | WO | 2016131519 | A1 | 25 August 2016 |
| | | | | EP | 3059707 | A1 | 24 August 2016 |
| | | | | CA | 2975794 | A1 | 25 August 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810988166